## Europäisches Patentamt

(19) **European Patent Office**

**Office européen des brevets**

(11) Numéro de publication: **0 197 837**
**B1**

(12) # FASCICULE DE BREVET EUROPÉEN

(45) Date de publication du fascicule du brevet:
**10.08.88**

(51) Int. Cl.⁴: **F 16 K 27/02, F 16 K 11/22**

(21) Numéro de dépôt: **86400630.9**

(22) Date de dépôt: **25.03.86**

(54) **Ensemble de robinets à volant destiné à une installation de distribution de vapeur.**

(30) Priorité: **25.03.85 FR 8504425**

(43) Date de publication de la demande:
**15.10.86 Bulletin 86/42**

(45) Mention de la délivrance du brevet:
**10.08.88 Bulletin 88/32**

(84) Etats contractants désignés:
**AT BE CH DE GB IT LI LU NL SE**

(56) Documents cité:
**AU-B-473 069**
**FR-A-2 143 277**
**GB-A-684 692**
**US-A-3 566 917**

(73) Titulaire: **Société dite: KLINGER AG.,**
**Baarenstrasse 10, CH- 6301 ZUG (CH)**

(72) Inventeur: **Dangreau, Bernard, Zone Industrielle**
**Babeuf, Fécamp (Seine Maritime) (FR)**
Inventeur: **Freneau, Daniel, Zone Industrielle**
**Babeuf, Fécamp (Seine Maritime) (FR)**

(74) Mandataire: **Cabinet Pierre HERRBURGER, 115,**
**Boulevard Haussmann, F-75008 Paris (FR)**

## Description

La présente invention se rapporte à un ensemble dit "clarinette" destiné à une installation de distribution de vapeur dite de "de traçage" dans des unités industrilles, notamment des unités chimiques ou pétrochimiques, constituée par une canalisation centrale parcourue par la vapeur à distribuer, et par un réseau de canalisations secondaires.

Les installations de ce type se composent d'un distributeur longitudinal monté sur la canalisation centrale portant des canaux de distribution destinés à être reliés aux canalisations secondaires du réseau ainsi qu'une série de perçages radiaux dans chacun desquels est monté un robinet à volant pour établir la circulation de capeur dans un canal de distribution et par suite dans une canalisation secondaire du réseau.

Dans les clarinettes de distribution classiques, les axes des perçages dans lesquels sont montés les robinets à volant sont tous parallèles entre-eux, ce qui signifie que les robinets sont alignés; cette configuration n'est pas sans poser un certain nombre de problèmes liés avant tout à l'encombrement: en effet, les volants de deux robinets voisins d'une même clarinette doivent être suffisamment éloignés pour que l'utilisateur n'éprouve aucune gêne pour passer ses doigts entre-eux, dans le but d'effectuer les manoeuvres nécessaires à la fermeture et à l'ouverture des différents robinets; de plus, pour être facilement accessibles, ces derniers doivent être à hauteur d'homme.

Par ailleurs, ces clarinettes sont destinées à être raccordées à de nombreux tuyaux, d'où la necessité de prévoir des raccords courbes et de renvois qui, outre les problèmes d'encombrement, entraînent une augmentation notable du prix de l'ensemble.

De plus, les clarinettes traditionnelles qui peuvent avoir des longueurs de plus de quatre mètres et sont souvent disposées obliquement, doivent être associées à des organes de support très importants, notamment en béton, eux aussi de nature à augmenter, dans une large mesure, le prix de revient de l'ensemble.

Les problèmes évoqués ci-dessus se posent notamment de manière particulièrement aiguë dans les unités chimiques et pétrochimiques dans lesquelles les clarinettes de distribution sont très nombreuses et disséminées, et où leur implantation au sol crée un encombrement entraînant un obstacle pour la circulation du personnel.

En outre, les exploitants se plaignent souvant du coût d'exploitation des robinets et des purgeurs nécessairement associés aux canalisations secondaries de récupération des condensats des installations de traçage.

Pour remédier de façon simple à ces invonvénients, il est avant tout nécessaire de diminuer la longueur des clarinettes de distribution.

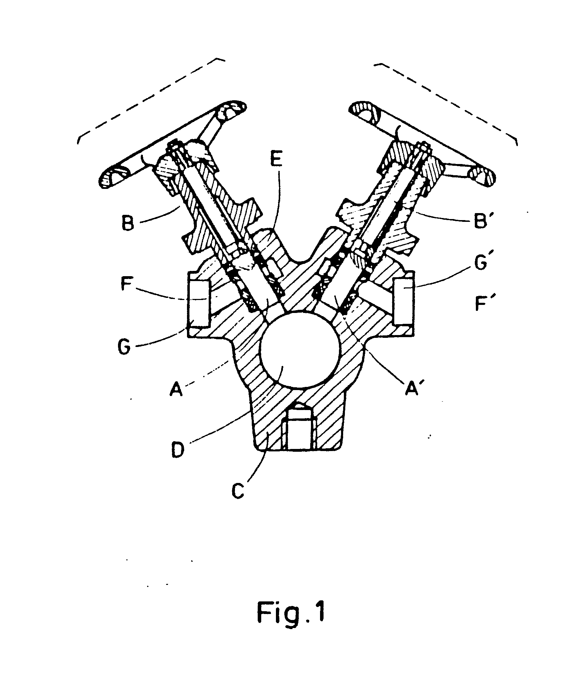

A cet effet, selon la figure 1, on a déjà pensé, au lieu d'aligner les axes des perçages A, A' recevant les robinets à volant B, B' d'un distributeur C renfermant la canalisation centrale D parcourue par la vapeur, à les combiner deux à deux selon une configuration en forme de V; cette configuration présente l'avantage de permettre de diminuer de moitié la longueur de la clarinette pour un même nombre de robinets, mais, oblige à usiner très précisément des surfaces obliques E pour la mise en place de cas derniers, et, surtout, à combiner chaque groupe A, A' de perçages avec des canaux de distribution F, F' débouchant vers l'extérieur par des orifices G, G' situés de part et d'autre du distributeur C. Or, le fait que les orifices G, G' ne soient pas situés du même côté du distributeur C, oblige à prévoir de nombreux coudages créant par suite un encombrement important; de plus, ces coudages sont toujours des pièces relativement complexes exigeant, à chaque fois, un assemblage long et rigoureux, augmentant lui aussi dans une large mesure le prix de revient de l'ensemble.

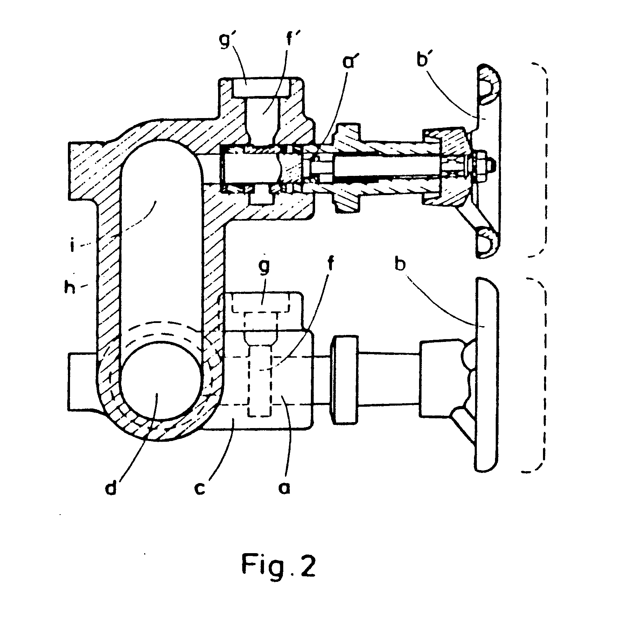

Pour remédier à cet inconvénient et proposer des clarinettes de distribution dont les canaux débouchent toujours du même côté du distributeur, tout en ayant une longueur totale inférieure à celles des clarinettes traditionelles, selon la figure 2, on a proposé d'insérer, entre les perçages a munis de robinets à volant b d'un distributeur c de type traditionnel muni en sa partie centrale d'une canalisation centrale d parcourue par de la vapeur, des pattes h reliées à la canalisation centrale en leur partie centrale i et munies en leur partie supérieure de perçages a' parallèles aux perçages a renfermant chacun un robinet b'.

Il est alors possible d'obtenir deux groupes de robinets à volant b, b' d'axes disposés dans deux plans parallèles entre-eux, coopérant chacun avec des canaux de distribution f, f' dont les orifices de sortie g, g' débouchent du même côté du distributeur c.

La présente invention a pour objet d'améliorer les ensembles de distribution décrits ci-dessus et de remédier à leurs inconvénients en proposant une clarinette de distribution de longueur relativement faible, dont l'utilisation n'oblige pas la mise en place de coudages annexes encombrants et peu fiables et qui, de plus, puisse être fabriquée en série.

A cet effet, l'invention se rapporte à un ensemble du type ci-dessus, se composant d'un distributeur longitudinal monté sur la canalisation centrale et portant une série de perçages radiaux d'axes non copolaires renfermant chacun un robinet à volant, respectivement susceptibles de raccorder à la canalisation centrale et portant une série de perçages radiaux d'axes non coplanaires renfermant chacun un robinet à volant, respectivement susceptibles de raccorder à la canalisation centrale, les canalisations secondaires du réseau pour établir la circulation de vapeur dans ces dernières, ou bien la récupération des condensats, caractérisé en ce que le distributeur est constitué par un organe tubulaire renfermant la canalisation principale en sa partie centrale et comportant une série de canaux de distribution parallèles débouchant vers l'extérieur par des orifices alignés parallèlement à l'axe de la canalisation principale, et destinés, respectivement, à être reliés aux canalisations secondaires du réseau, chacun de ces canaux étant susceptibles d'être reliés à la canalisation principale au moyen de l'un des robinets à volant.

Le fait que les orifices des canaux de distribution soient alignés permet de diminuer, dans une large mesure, le coût et l'encombrement liés à la présence de coudages, et parallèlement d'augmenter la fiabilité de l'ensemble.

Pour faciliter la mise en place des canalisations secondaires du réseau sur les orifices des canaux de distribution, il est préférable, selon une autre caractéristique de l'invention, que les orifices soient alignés parallèlement sur une face plane spécialement usinée du distributeur, perpendiculairement à l'axe des canaux.

Selon une autre caractéristique de l'invention, les axes des perçages renfermant les robinets à volant sont répartis alternativement en au moins deux groupes dans au moins deux distincts contenant l'axe de la canalisation principale.

De préférence, dans chacun de ces groupes, les axes des perçages sont alignés.

Cette configuration ainsi que le décalage des volants qui en résulte, permettent de diminuer notablement la longueur des clarinettes de distribution, et par suite, leur encombrement.

De plus, étant donné que les canaux de distribution débouchent du même côté du distributeur, cet avantage ne se trouve pas annulé par la nécessité de prévoir des raccords complémentaires.

La configuration conforme à l'invention utilisée le plus souvent, consistie à répartir les robinets à volant en deux groupes et à les disposer en quinconce.

Selon une autre caractéristique de l'invention, le distributeur comporte deux faces planes longitudinales contigües définissant, entre-elles, un angle obtu, chaque groupe de perçages débouchant par des orifices alignés sur l'une de ses faces, et ces dernières étant respectivement perpendicularies aux axes des perçages.

Cette configuration s'est avérée comme étant la plus avantageuse du point de vue de l'usinage.

Bien entendu, le distributeur peut avoir une configuration quelconque sans pour cela sortir du cadre de l'invention et notamment être constitué par un bloc laminé ou encore par une pièce moulée.

Les caractéristiques de l'ensemble de distribution qui fait l'objet de l'invention seront décrites plus en détail en se référant aux dessins annexés, dans lesquels:
- les figures 1 et 2 représentent, vue en coupe, deux exemples de configurations conformes à l'art antérieur,
- la figure 3 est une vue en perspective d'un distributeur conforme à l'invention,
- la figure 4 est une vue schématique en coupe du distributeur représenté sur la figure 3,
- la figure 5 représente une autre configuration de ce distributeur.

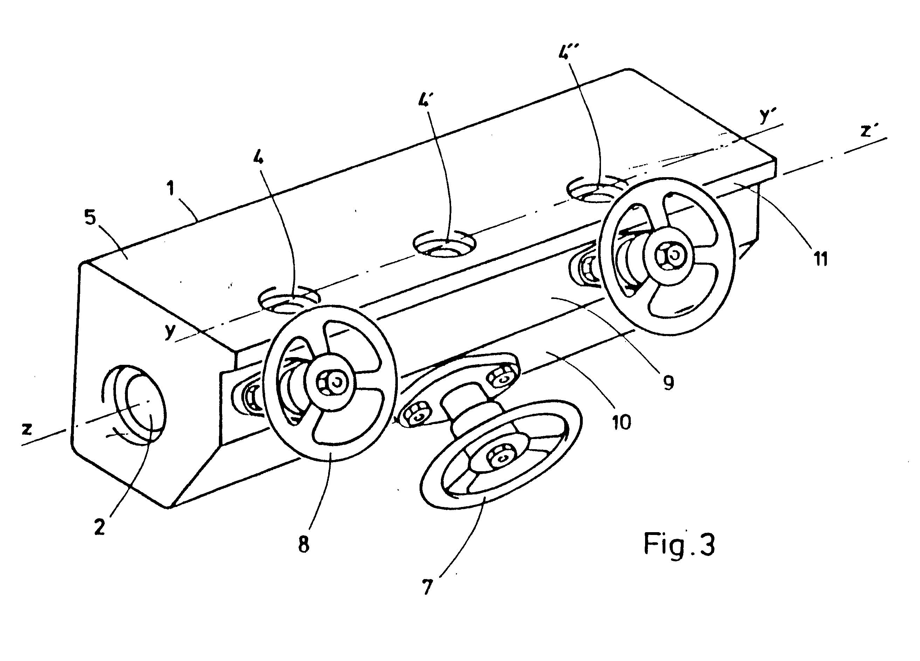

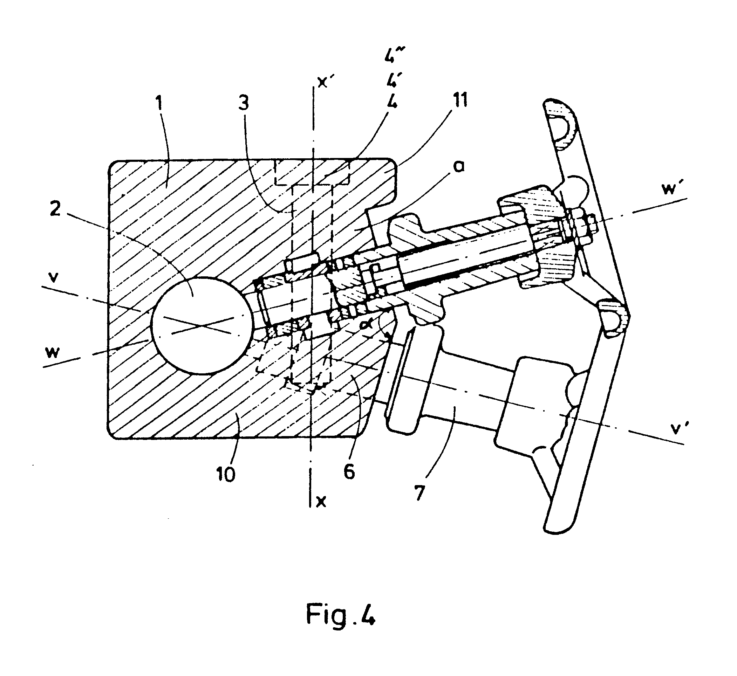

Selon les figures 3 et 4, la clarinette conforme à l'invention se compose d'un distributeur 1 constitué par un bloc tubularie laminé longitudinal, portant à sa partie centrale un perçage cylindrique 2 correspondant à la canalisation centrale qui est parcourue par la vapeur, et est destiné à être relié à un réseau de canalisations secondaires non représenté.

Pour permettre ce raccordement, le distributeur 1 comporte une série de canaux de distribution d'axe x-x' parallèles qui débouchent vers l'extérieur par des orifices 4, 4', 4'' qui sont tous alignés sur une droite y-y' parallèle à l'axe z-z' de la canalisation centrale 2.

Pour faciliter le raccordement des canaux de distribution 3 et des canalisations secondaires du réseau, le distributeur 1 comporte une face plane 5, spécialement usinée perpendiculaire à l'axe x-x' de ces canaux, dans laquelle débouchent les orifices 4, 4', 4''.

Par ailleurs, la liaison de chacun des canaux de distribution 3 avec la canalisation centrale 2 est établie par l'intermédiaire d'un ensemble de perçages radiaux 6 renfermant chacun un robinet à volant 7.

Les robinets à volant 7 sont constitués par des organes dont la configuration, classique, ne sera pas décrite en détail dans un but de brièveté.

Comme on peut le voir sur les figures 3 et 4, les axes v-v' et w-w' des perçages 6 renfermant les robinets à volant 7 sont répartis en deux groupes dans deux plans radiaux distincts. Les axes v-v' ou w-w' des perçages 6 de chaque groupe sont tous parallèles entre-eux, et sont situés à égale distance les uns des autres. On obtient ainsi une disposition en quinconce des volants 8 des robinets 7. Cette configuration permet de disposer ces derniers reletivement proches les uns des autres, et donc, de diminuer dans une large mesure la longueur du distributeur 1.

Pour des raisons de facilité d'usinage, les perçages 6 débouchent vers l'extérieur par deux faces contigües 9 et 10 respectivement perpendicularies à leur axe v-v' et w-w', définissant entre-elles un angle obtu α.

Le distributeur 1 comporte, par ailleurs, un bourrelet de renforcement 11 prévu au niveau de la face 5, pour accroître sa rigidité.

Grâce à la configuration définie ci-dessus, le distributeur 1 peut être fabriqué en série, puis raccordé sur place aux diverses canalisations du réseau, ce qui permet de diminuer notablement sont prix de revient.

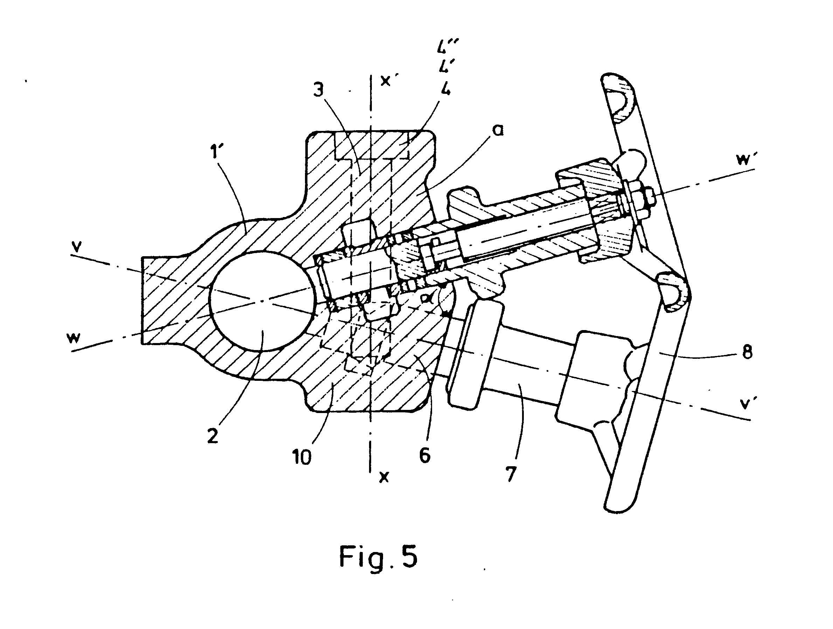

La figure 5 représente une variante de la figure 4, selon laquelle le distributeur 1' n'est pas constitué par un bloc laminé, mais par une pièce moulée.

Abstraction faite de cette différence, tous les éléments de la figure 5 sont similaires à la c. ⸜ représentée sur les figures 3 et 4.

## Revendications

1. Ensemble dit "clarinette" destiné à une installation de distribution de vapeur dite "de traçage" dans des untiés industrielles, natomment des unités chimiques ou pétrochimiques, constitué par une canalisation centrale (2) parcourue par la vapeur à distribuer et par un réseau de canalisations secondaires, ensemble se composant d'un distributeur longitudinal (1) constitué par un organe tubulaire renfermant la canalisation principale (2) en sa partie centrale et portant une série de perçages radiaux (6) d'axes (v-v' et w-w') non coplanaires, renfermant chacun un robinet (7) à volant (8), respectivement susceptibles de racçorder à la canalisation centrale (2) les canalisations secondaires du réseau pour établir le circulation de vapeur dans ces dernières, ensemble caractérisé en ce que le distributeur (1) comporte une série de canaux de distribution (3) débouchant vers l'extérieur par des orifices (4, 4', 4") et des raccordements disposés sur la même face (5), c'est-à-dire du même côté du distributeur (1).

2. Ensemble selon la revendication 1, caractérisé en ce que l'axe de sortie des canaux (3) est disposé sur l'axe (y-y') parallèle à l'axe longitudinal du distributeur (z-z').

3. Ensemble selon l'une quelconque des revendications 1 et 2 précédentes, caractérisé en ce que les robinets (7) sont disposés en quinconce suivant des axes inclinés (v-v' et w-w').

4. Ensemble selon l'une quelconque des revendications 1 à 3 précédentes, caractérisé en ce que les robinets (7) sont des robinets à piston.

5. Ensemble conforme à l'une quelconque des revendications 1 à 4 précédentes, caractérisé en ce que le perçage des canaux (3) est effectué suivant l'axe (x-x') perpendiculaire à l'axe longitudinal du distributeur (z-z') et tangentiellement à la gorge disposée entre la rondelle supérieure et la rondelle inférieure du robinet à piston (7).

6. Ensemble selon l'une quelconque des revendications 1 à 5 précédentes, caractérisé en ce que le distributeur (1) est constitué par un bloc laminé.

7. Ensemble selon l'une quelconque des revendications 1 à 5 précédentes, caractérisé en ce que le distributeur (1') est constitué par une pièce moulée.

## Patentansprüche

1. Hahneinheit, sogenannte "Klarinette" für eine trassierte Dampfverteilungsanlage in Industrieanlagen, insbesondere in chemischen oder petrochemischen Anlagen, welche aus einem zentralen, von dem zu verteilenden Dampf durchströmten Kanal und einem Netzwerk von sekundären Kanälen besteht, wobei die Hahneinheit aus einem länglichen Verteiler (1) besteht, der durch ein rohrförmiges, in seinem mittleren Teil den zentralen Kanal (2) umschließendes Element gebildet ist und eine Reihe von radialen Durchbrechungen auf nicht in einer Ebene liegenden Achsen (v-v' und w-w') umfaßt, von denen jede einen Hahn (7) mit einem Handrad (8) enthält und zur Verbindung des zentralen Kanals (2) mit den jeweiligen sekundären Kanälen des Netzwerks bestimmt ist, um im letzteren eine Dampfzirkulation zu erzeugen, dadurch gekennzeichnet, daß der Verteiler (1) eine Reihe von Verteilerkanälen (3), die an Öffnungen (4, 4', 4") auf der Außenseiten ausmünden, und auf der gleichen Fläche (5), d.h. auf der gleichen Seite des Verteilers (1) gelegene Anschlüsse umfaßt.

2. Hahneinheit nach Anspruch 1, dadurch gekennzeichnet, daß die Auslaßachse der Kanäle (3) auf der zur Längsachse (z-z') des Verteilers parallelen Achse (y-y') gelegen ist.

3. Hahneinheit nach Anspruch 1 oder 2, dadurch gekennzeichnet, daß die Hähne (7) wechselständig mit geneigten Achsen (v-v' und w-w') angeordnet sind.

4. Hahneinheit nach einem der Ansprüche 1 bis 3, dadurch gekennzeichnet, daß die Hähne (7) Kolbenschieberhähne sind.

5. Hahneinheit nach einem der Ansprüche 1 bis 4, dadurch gekennzeichnet, daß die Durchbrüche der Kanäle (3) jeweils auf der zur Längsachse (z-z') des Verteilers senkrechten Achse (x-x') sowie tangential zu dem Zwischenraum zwischen der oberen und der unteren Dichtung des Kolbenschieberhahns (7) gelegen sind.

6. Hahneinheit nach einem der Ansprüche 1 bis 5, dadurch gekennzeichnet, daß der Verteiler (1) aus einem Walzblock besteht.

7. Hahneinheit nach einem der Ansprüche 1 bis 5, dadurch gekennzeichnet, daß der Verteiler (1') aus einem Gußstück besteht.

## Claims

1. An assembly called a "clarinet" intended for a steam distribution installation called "a network" in industrial units, particularly in chemical or petrochemical plant, constituted by a central passage (2) through which the steam to be distributed passes and a network of secondary passages, the assembly comprising a longitudinal distributor (1) made up of a tubular element containing the principal passage (2) in its central part and having a series of radial drillings (6) having non-coplanar axes (v-v' and w-w'), each containing a tap (7) with a handwheel (8), respectively able to connect the central passage (2) to the secondary passages of the network in order to establish the circulation of steam in the latter the assembly characterised in that the distributor (1) includes a series of distribution channels (3) emerging from orifices (4, 4', 4'') and connecting passages positioned on the same side (5), that is to say the same side of the distributor (1).

2. An assembly according to claim 1, characterised in that the exit axis of the channels (3) is positioned on the axis (y-y') parallel to the longtitudinal axis of the distributor (z-z').

3. An assembly according to either of claims 1 and 2 above, characterised in that the taps (7) are positioned in staggered rows following the inclined axes (v-v' and w-w').

4. An assembly according to any of claims 1 to 3 above, characterised in that the taps (7) are piston valves.

5. An assembly according to any of the preceding claims 1 to 4 characterised in that the drilling of the channels (3) is effected following the axis (x-x') perpendicular to the longitudinal axis of the distributor (z-z') and tangentially to the mouth positioned between the upper washer and the lower washer of the piston valve (7).

6. An assembly according to any of the preceding claims 1 to 5 characterised in that the distributor (1) is made up from a laminated block.

7. An assembly according to any of the preceding claims 1 to 5 characterised in that the distributor (1') is made from a casting.

Fig.1

Fig. 2

Fig. 3

0 197 837

Fig.4

Fig. 5